(19) Europäisches Patentamt
European Patent Office
Office européen des brevets

(11) **EP 1 243 496 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(51) Int Cl.:
*B62D 6/00* *(2006.01)*
*B62D 117/00* *(2006.01)*
*B62D 37/00* *(2006.01)*
*B62D 113/00* *(2006.01)*
*B62D 121/00* *(2006.01)*

(21) Anmeldenummer: **02005936.6**

(22) Anmeldetag: **15.03.2002**

(54) **Vorrichtung für ein Lenksystem mit einem Lenkelement und Verfahren zum Erzeugen eines Lenkmoments für ein Lenkelement**

Apparatus for a steering system with a steering element and method for generation of a steering moment for a steering element

Dispositif pour un système de direction avec un élément de direction et une méthode pour générer un couple de direction pour un élément de direction

(84) Benannte Vertragsstaaten:
**DE ES FR GB IT**

(30) Priorität: **23.03.2001 DE 10114378**

(43) Veröffentlichungstag der Anmeldung:
**25.09.2002 Patentblatt 2002/39**

(73) Patentinhaber: **AUDI AG**
**85045 Ingolstadt (DE)**

(72) Erfinder: **Buschardt, Boris**
**85049 Ingolstadt (DE)**

(74) Vertreter: **Thielmann, Frank**
**AUDI AG,**
**Patentabteilung**
**85045 Ingolstadt (DE)**

(56) Entgegenhaltungen:
**DE-A- 19 912 169    US-A- 4 715 463**
**US-A- 5 097 917    US-A- 5 907 277**

## Beschreibung

Die vorliegende Erfindung betrifft eine Vorrichtung für ein Lenksystem nach dem Oberbegriff von Patentanspruch 1 und ein Verfahren zum Erzeugen eines Lenkmoments an einem Lenkelement, insbesondere einem Lenkelement nach dem Oberbegriff von Patentanspruch 12.

Bei aus dem Stand der Technik bekannten Lenksystemen mit einem am Lenkrad eines Fahrzeugs resultierenden Lenkmoment, wie bei der in der DE 199 51 548 A1 beschriebenen elektrischen Servolenkvorrichtung bzw. dem Steer-by-wire Lenksystem für Kraftfahrzeuge, beschrieben in der DE 199 12 169 A1, erhält der Fahrer gerade bei geringen Reibwerten zwischen Reifen und Fahrbahn infolge der Absenkung des allgemeinen Lenkmomentniveaus nur noch unzureichende Informationen über die am Reifen wirkenden Seitenkräfte. Die Information über die Seitenkräfte ist aber gerade bei kritischen Fahrzuständen für den Fahrer von Bedeutung, da sie Rückschlüsse über das Fahrzeugverhalten ermöglicht und ihn bei der Fahrzeugsteuerung, insbesondere auf der Stabilisierungsebene, unterstützt.

Darüber hinaus werden oftmals noch weitere Informationen diverser Assistenzsysteme über das Lenkmoment vermittelt, was die Wahrnehmung des Fahrers weiter verfälschen kann. So ist zum Beispiel bekannt, dass die Information über die Querabweichung von der Sollfahrspur in der Regel in Form von Lenkmomentänderungen übertragen wird.

Aufgabe der Erfindung ist es, die gattungsgemäße Vorrichtung und das gattungsgemäße Verfahren derart weiterzubilden, dass gewährleistet wird, dass kritische Fahrsituationen besser als bei den bekannten Vorrichtungen und Verfahren an den Fahrer weitergegeben werden.

Diese Aufgabe wird erfindungsgemäß durch ein Lenksystem mit den Merkmalen des Patentanspruchs 1 und durch ein Verfahren zur Erzeugung eines Lenkmoments mit den Merkmalen des Patentanspruchs 12 gelöst.

Der Erfindung liegt die Erkenntnis zugrunde, dass bei den nach dem Stand der Technik bekannten Lenksystemen, die nicht mehr eine direkte Kraftübertragung von Reifen auf das Lenkrad/enkelement besitzen, das Problem besteht, dass Information, die bisher mechanisch über die Reifen übertragen wurde, verloren gegangen ist. Diese sollte jedoch dem Fahrer weiter zugänglich gemacht werden. Da nämlich die Reifen den einzigen Kontakt zur Strasse darstellen, kann der Fahrer nur über sie Informationen über Straßenoberfläche, Hindernisse, Straßenzustand und dergleichen erhalten. Bei mechanischen Lenksystemen ohne Servounterstützung, die einen direkten Kontakt zwischen Lenkrad und Radaufhängung herstellten, konnten diese Informationen problemlos an den Fahrer weitergegeben werden. Mit der Weiterentwicklung zu Servolenksystemen oder Steer-by-wire Lenksystemen ging dieser direkte Informationstransfer zugunsten eines erhöhten Komforts und einer erhöhten Fahrersicherheit verloren. An ihre Stelle tritt ein künstlich generiertes Lenkradmoment, das sich nach dem Stand der Technik aus zumindest drei Hauptmerkmalen zusammensetzt.

- Ein erster Anteil ist der sogenannte Rückstellanteil, der mit den auf die Reifen wirkenden Seitenkräften korreliert ist. Er trägt dazu bei, dass die Räder von einem eingeschlagenen Zustand in ihre Ausgangsposition - geradeaus - zurückkehren, sobald keine Kraft mehr vom Lenkrad ausgeübt wird. Für die Höhe der Kraft spielt insbesondere die Reibung zwischen Fahrbahn und Reifen eine Rolle. So ist die effektive Seitenkraft, die auf einen Reifen wirkt, bei Glatteis reduziert gegenüber der effektiven Seitenkraft bei trockener Fahrbahn. Um diesem Effekt Rechnung zu tragen, wird deshalb im Stand der Technik bei einem geringeren Reibwert zwischen Fahrbahn und Reifen, der Wert des Rückstellanteils durch geeignete Maßnahmen reduziert.
- Ein zweiter Anteil ist der Lenkbewegungsrichtungsanteil, der der Lenkbewegung entgegengesetzt ist. Über ihn wird die Schwergängigkeit der Lenkung bestimmt. Diese hat einen konstanten Faktor, der bei Auslenkung des Lenkrads aus der Geradeausposition in die jeweils entgegengesetzte Richtung wirkt. Dieser Faktor kann aber auch abhängig vom jeweiligen Straßenzustand gemacht werden. So erwartet der Fahrer beispielsweise, dass bei Glatteis ein leichteres Drehen der Räder im Stand möglich ist.
- Der dritte Anteil ist der Lenkgeschwindigkeitsanteil. Er ist korreliert mit der Geschwindigkeit, mit der das Lenkrad gedreht wird. Gerät der Fahrer in eine kritische Fahrsituation, beispielsweise in eine Schleudersituation, können zu schnell hintereinander ausgeführte, unkontrollierte oder widersprüchliche Lenkbewegungen durch Dämpfung der Geschwindigkeit und damit Erhöhung der Schwergängigkeit der Lenkung entschärft werden, was womöglich in einer Schleudersituation ein Ausbrechen des Fahrzeugs verhindert.

Darüber hinaus können auch andere Informationen über weitere Anteile an das Lenkrad weitergegeben werden und weitere Anteile in das Lenkmoment einfließen.

Im nächstliegenden Stand der Technik wurden diese Anteile summiert und die Summe mit einem reibwertabhängigen Verstärkungsfaktor bewertet. Dies kann aber zur Folge haben, dass die resultierenden Lenkmomente, insbesondere bei einem geringen Reibwert der Strasse, nicht mehr vom Fahrer wahrgenommen werden können. Beispielsweise wurde das Lenkmomentniveau aufgrund von Glatteis teilweise so herabgesetzt, dass dem Fahrer nahezu keinerlei Widerstand gegen seine Lenkbewegung entgegengesetzt wurde und keine Rückmeldung über die wirksamen Seitenkräfte gegeben wurde. Dies kann zu fatalen Fehleinschätzungen der jeweiligen Fahrsituation führen oder unkontrollierte Lenkbewegungen provozieren.

Die erfindungsgemäße Lösung dieses Problems besteht in der individuellen Bewertung der drei Anteile in Abhängigkeit des Reibwerts zwischen Fahrbahn und Reifen. Die Erkenntnis der Erfindung besteht darin, dass sich obige Probleme sicher dadurch lösen lassen, dass der Rückstellanteil entweder unabhängig vom Reibwert bleibt oder bei geringerem Reibwert eine Erhöhung des Rückstellanteils erfolgt, wodurch ein Informationstransfer der wirkenden Seitenkräfte mittels des Lenkelements an den Fahrer sichergestellt ist. Um aber zu gewährleisten, dass der Fahrer auch die Information über den Reibwert der Strasse erhält, wird dieser über das lenkbewegungsrichtungsabhängige Lenkmoment an den Fahrer übertragen. Zusätzliche Sicherheit vermittelt die Anpassung des lenkgeschwindigkeitsabhängigen Lenkmoments an den Reibwert. Dadurch können kritische Fahrsituationen leichter gemeistert werden, wie weiter unten noch näher ausgeführt.

Der Vorteil der Erfindung besteht also darin, dass die Wahrnehmung des Fahrzeugverhaltens, insbesondere über die Seitenkräfte, durch eine individuelle Anpassung der Lenkmomentanteile zusätzlich unterstützt wird. Damit bleibt speziell die subbewusste Verarbeitung der antrainierten Kopplung leichtgängige Lenkung = glatte Strasse voll erhalten, ohne aber Gefahr zu laufen, durch Absenkung des allgemeinen Lenkmomentniveaus einen Verlust des Seitenkraftempfindens und somit der Kontrolle über das Fahrzeug in Kauf nehmen zu müssen.

Eine weitere vorteilhafte Ausführungsform der Erfindung sieht vor, dass das oben beschriebene erfindungsgemäße Lenksystem eine Vorrichtung zur Änderung des Lenkbewegungsrichtungsfaktors aufweist, die beim Feststellen eines reduzierten Reibwerts den Lenkbewegungsrichtungsfaktor ebenfalls reduziert. Dadurch wird gewährleistet, dass der Fahrer bei glatter Strasse eine leichtgängigere Lenkung vorfindet.

Des weiteren ist eine vorteilhafte Ausführungsform realisierbar, die eine Vorrichtung zur Änderung des Rückstellfaktors umfasst, die bei geringem Reibwert den Rückstellfaktor erhöht. Dies führt zu einen starken Gewichtung der Seitenkräfte, was sicherstellt, dass die Seitenkräfteinformationen an den Fahrer weitergegeben werden.

In einer anderen vorteilhaften Variante bleibt der Rückstellwert vom Reibwert unabhängig. Die hat den Vorteil, dass bei einfachem Aufbau jedenfalls eine Übertragung der Seitenkräfte ohne Abschwächung infolge verminderten Reibwerts ermöglicht wird.

Die Wahl zwischen Erhöhung oder Unabhängigkeit des Rückstellanteils vom Reibwert kann beispielsweise von den Grundeinstellungen, dem Aufwand oder dem individuellen Fahrerwunsch abhängen.

Ein weiterer Vorteil wird durch das oben beschriebene Lenksystem realisiert, indem der Lenkgeschwindigkeitsfaktor von dem Reibwert abhängig ist.

Vorteilhaft ist daher ein Ausführungsbeispiel des Lenksystems, bei dem eine Vorrichtung zur Änderung des Lenkgeschwindigkeitsfaktors umfasst ist, die so ausgelegt ist, dass bei geringem Reibwert auch der Lenkgeschwindigkeitsfaktor reduziert wird. Dies trägt der Gewöhnung des Fahrers Rechnung, der ein leichtgängiges Drehen des Lenkelements auf glatter Strasse erwartet. Realisierbar ist jedoch auch eine andere vorteilhafte Variante, bei der eine Reduktion des Reibwerts eine Erhöhung des Lenkgeschwindigkeitsfaktors zur Folge hat. Dies hat den großen Vorteil, dass zu starke Lenkreaktionen des Fahrers auf Grund des fehlenden Widerstands bei Glatteis verhindert werden.

Die Wahl zwischen Erhöhung oder Verringerung des Lenkgeschwindigkeitsfaktors in Abhängigkeit des Reibwerts zwischen Fahrbahn und Reifen kann beispielsweise von der Grundeinstellung des Lenkbewegungsrichtungsfaktors oder aber auch von dem individuellen Bedürfnis des Fahrers abhängen.

Für besonders gute Fahrer, die nur ungern der Technik zuviel Kontrolle über das Lenkelement abgeben mögen, ist eine vorteilhafte Ausführung der Erfindung realisierbar, die den Lenkgeschwindigkeitsfaktor völlig unbeeinflusst vom Reibwert lässt. In diesem Zusammenhang kann vorgesehen werden, dass die Wahl, ob und wie der Lenkgeschwindigkeitsfaktor in das Lenkmoment eingeht, manuell getroffen werden kann.

Eine besonders vorteilhafte Ausführungsform der Erfindung ist die Realisierung des oben beschriebenen Lenksystems als eine Steer-by-wire Lenkvorrichtung. Dabei werden die Vorrichtungen zur Erzeugung des Lenkgeschwindigkeitsanteils, des Lenkbewegungsrichtungsanteils und des Rückstellmoments bevorzugt in einer einzigen Vorrichtung zusammengefasst. Sie kann weiterhin als Lenkhilfsvorrichtung eine Aktuatoreinheit umfassen. Der große Vorteil dieser Ausführungsform besteht darin, dass im Fall eines Unfalls keine Lenksäule in den Fahrerraum dringen kann.

Dieses Lenksystem kann weiterhin einen Rückstellmomentsensor zur Ermittlung des Rückstellmoments umfassen, das infolge der Seitenkräfte auf die Lenkung wirkt, und einen Lenkelementwinkelsensor zur Ermittlung der Lenkelementgeschwindigkeit und der Richtung der Lenkelementbewegung.

Eine andere besonders vorteilhafte Ausführungsform der Erfindung ist die Realisierung als elektrische Servolenkung, die eine als Servounterstützung ausgebildete Lenkhilfsvorrichtung umfassen kann. Sie hat den Vorteil, dass auch bei der Servolenkung eine bessere Umsetzung der Informationen erfolgt.

Diese vorteilhafte Ausführung kann dadurch weitergebildet sein, dass sie einen Rückstellmomentsensor zur Ermittlung des Rückstellmoments infolge von Seitenkräften, einen Lenkelementwinkelsensor zur Ermittlung der Lenkgeschwindigkeit und der Richtung der Lenkbewegung, sowie einen Lenkmomentsensor zur Ermittlung des am Lenkelement resultierenden Lenkmoments umfasst.

Weitere vorteilhafte Weiterbildungen der Erfindung sind in den Unteransprüchen definiert.

Ein Ausführungsbeispiel wird im folgenden unter Hinweis auf die beigefügten Zeichnungen näher beschrieben. Es stellen dar:

Figur 1: eine schematische Darstellung eines ersten erfindungsgemäßen Ausführungsbeispiels.

Figur 2: ein Blockdiagramm eines zweiten Ausführungsbeispiels für ein erfindungsgemäßes Lenksystem, wobei das am Lenkelement resultierende Lenkmoment einen Rückstellanteil, einen Lenkgeschwindigkeitsanteil und einen Lenkbewegungsrichtungsanteil umfasst.

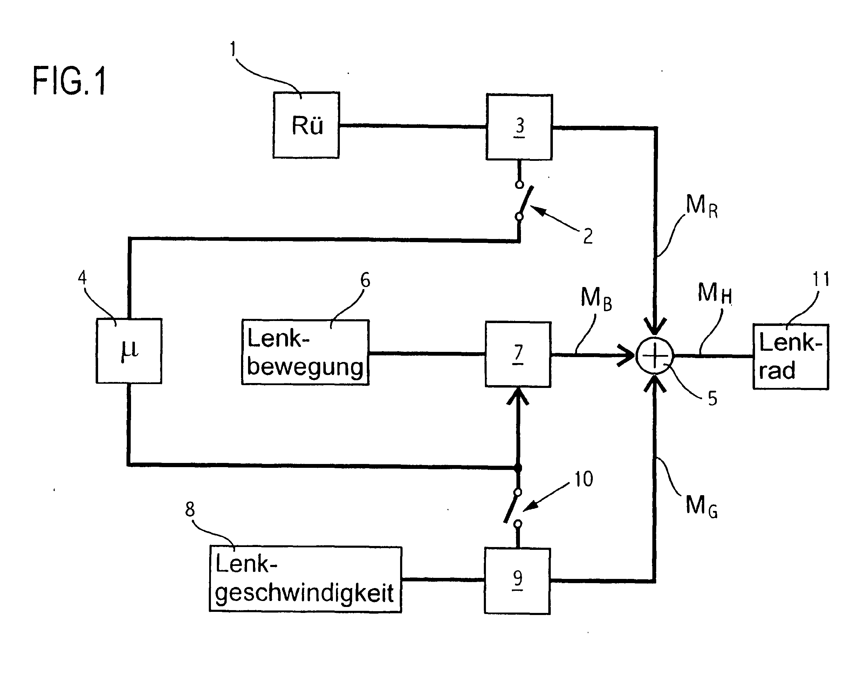

In Fig.1 ist schematisch das Übertragungsprinzip der erfassten Größen Reibung zwischen Fahrbahn und Reifen, im folgenden als Reibwert bezeichnet, Rückstellmoment resultierend aus den Seitenkräften, im folgenden als Rückstellmoment bezeichnet, Lenkgeschwindigkeit und Lenkbewegungsrichtung in einem erfindungsgemäßen Lenksystem an den Fahrer dargestellt.

Das Rückstellmoment 1 Rü, kann bei geschlossenem Schalter 2 im Rückstellmodifier 3 mit einem festgestellten Reibwert 4 $\mu$ so in Verbindung gebracht werden, dass der an der Summationsvorrichtung 5 ankommende, mit mehreren Faktoren im Rückstellmodifier 3 gewichtbare Rückstellanteil $M_R$ bei geringerem Reibwert 4 $\mu$ erhöht wird. Ist der Schalter 2 in offener Stellung, bleibt der Rückstellanteil $M_R$ vom Reibwert 4 $\mu$ unbeeinflusst.

Eine festgestellte Lenkbewegung 6, kann mit einem festgestellten Reibwert 4 $\mu$ in einem Reibungsmodifier 7 zu einem reibwertabhängigen Wert werden und geht als lenkbewegungsrichtungsabhängiger Momentenanteil $M_B$ in die Summationsvorrichtung 5 ein. Im Reibungsmodifier 7 kann die Beeinflussung auch durch andere Faktoren berücksichtigt werden. Die festgestellte Lenkgeschwindigkeit 8 kann, neben der Beaufschlagung mit einem Faktor, der von anderen Größen abhängen kann, in einem Dämpfungsmodifier 9 ebenfalls mit dem Reibwert 4 $\mu$ korreliert werden und als lenkgeschwindigkeitsabhängiger Momentenanteil $M_G$ in die Summationsvorrichtung 5 eingehen. Durch den Schalter 10 kann jedoch bewirkt werden, dass der lenkgeschwindigkeitsabhängige Momentenanteil $M_G$ als reibwertunabhängiger Wert der Summationsvorrichtung 5 zugeführt wird. Das Ausgangssignal der Summationsvorrichtung 5 wird als resultierendes Lenkelementmoment $M_{Res}$ über das Lenkelement, das als Lenkrad 11 mit offenem oder geschlossenem Ring, als Joystick oder als Lenkstange etc. ausgeführt sein kann an den Fahrer abgegeben.

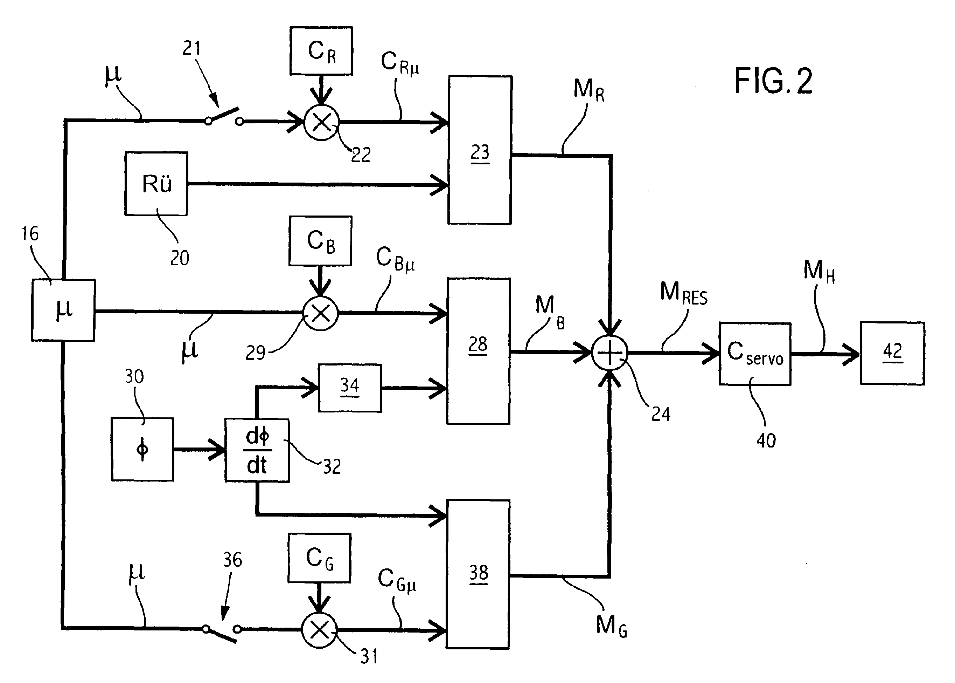

Ein besonders vorteilhaftes Ausführungsbeispiel wird nachfolgend anhand des Blockdiagramms von Fig. 2 beschrieben. Gemäß Fig. 2 hat das Lenksystem einen Reibwertsensor 16, der den Reibwert $\mu$ zwischen mindestens einem Reifen und der Fahrbahn bestimmt.

Der Reibwertsensor 16 kann dazu in einem oder mehreren der Reifen des Fahrzeugs lokalisiert sein. Der Reibwert $\mu$ kann bei geschlossenem Schalter 21 mit einem aus der Radaufhängungs- und Lenkkinematik stammenden reibwertunabhängigen Rückstellfaktor $C_R$, in einer ersten Verknüpfungsvorrichtung 22 verknüpft werden. Bei dieser Verknüpfung und allen im nachfolgenden erwähnten Verknüpfungen kann es sich besonders bevorzugt um eine Multiplikation handeln. Die Verknüpfung resultiert in diesem Fall in einer Erhöhung des Rückstellfaktors $C_R$. Ist der Schalter 21 offen bleibt der Rückstellfaktor $C_R$ vom Reibwert unabhängig. Aus einen Rückstellmomentsensor 20, beispielsweise realisiert durch einen Spurstangenkraftsensor, der das Rückstellmoment, beispielsweise durch Bestimmung der Spurstangenkräfte an den Vorderrädern, misst, ergibt sich ein Wert, der mit dem reibwertabhängigen Rückstellfaktor $C_{R\mu}$ oder dem reibwertunabhängigen Rückstellfaktor $C_R$ in einer Verknüpfungsvorrichtung 23 verknüpft wird. Das Ausgangssignal der Verknüpfungsvorrichtung 23 wird als Rückstellanteil $M_R$ einer Summationsvorrichtung 24 zugeführt.

Gleichermaßen wird aus einem reibwertunabhängigen Lenkbewegungsrichtungsfaktor $C_B$ unter Berücksichtigung des Reibwerts $\mu$ in der Verknüpfungsvorrichtung 29 ein reibwertabhängiger Lenkbewegungsrichtungsfaktor $C_{B\mu}$ gebildet, der als Eingangssignal einer Verknüpfungsvorrichtung 28 zugeführt wird. Das System umfasst weiterhin einen Lenkradwinkelsensor 30, der den Lenkradwinkel $\Phi$ feststellt. Der Sensor kann zum Beispiel durch einen Lenkradwinkelsensor am Lenkrad bzw. an der Lenksäule realisiert sein. Der Lenk-Lenkradwinkel $\Phi$ wird an eine Ableitungsvorrichtung 32 weitergeleitet, die die Ableitung von $\Phi$ nach der Zeit, das heißt

$$\frac{d\phi}{dt},$$

bestimmt. Dies entspricht der Lenkradwinkelgeschwindigkeit, welche einer Vorzeichenbestimmungsvorrichtung 34 zugeführt wird, deren Ausgangssignal ebenfalls als Eingangssignal der Verknüpfungsvorrichtung 28 zugeführt wird. In der Verknüpfungsvorrichtung 28 werden das Ausgangssignal der Vorzeichenbestimmungsvorrichtung 34 und der reibwertabhängige Lenkbewegungsrichtungsfaktor $C_{B\mu}$ zum Lenkbewegungsrichtungsanteil $M_B$ verknüpft, wobei letzterer ebenfalls der Summiervorrichtung 24 zugeführt wird.

Der Reibwert $\mu$ kann jedoch auch dazu verwendet werden, je nach Stellung eines Schalters 36, um einen reibwertunabhängigen Lenkgeschwindigkeitsfaktor $C_G$ in einer Verknüpfungsvorrichtung 31 vom Reibwert $\mu$ abhängig zu machen. Für den Fall, dass dies zutrifft, wird ein reibwertabhängiger Lenkgeschwindigkeitsfaktor $C_{G\mu}$ kreiert, der als Eingangssignal an eine Verknüpfungsvorrichtung 38 angelegt wird. Diese Verknüpfungsvorrichtung 38 wird andererseits als Eingangssignal die

Lenkgeschwindigkeit $\dfrac{d\phi}{dt}$ zugeführt. In der Verknüpfungsvorrichtung 38 werden die Lenkgeschwindigkeit $\dfrac{d\phi}{dt}$ sowie der reibwertabhängige Lenkgeschwindigkeitsfaktor $C_{G\mu}$ oder ein reibwertunabhängiger Lenkgeschwindigkeitsfaktor $C_G$ miteinander verknüpft und das Ergebnis dieser Verknüpfung als Lenkgeschwindigkeitsanteil $M_G$ an die Summiervorrichtung 24 angelegt.

Das Ausgangssignal der Summiervorrichtung 24 ist ein resultierendes Lenkradmoment $M_{RES}$, das in einer Lenkhilfsvorrichtung 40 um einen Faktor $C_{servo}$ verstärkt werden kann und schließlich als resultierendes Lenkradmoment $M_H$ an das Lenkrad 42 angelegt wird.

Bei einer vorteilhaften Ausführungsform des Lenksystems als Steer-by-Wire-System kann die Verstärkung mit dem Servoverstärkungsfaktor $C_{servo}$ entfallen. Anstatt dessen umfasst die Lenkhilfsvorrichtung 40 einen Aktuator.

**Patentansprüche**

1. Lenksystem für ein Fahrzeug mit einem Lenkelement (8; 32) und mindestens einem Reifen, wobei das am Lenkelement (8; 32) resultierende Lenkelementmoment ($M_H$) folgende Anteile umfasst:

   - einen Rückstellanteil ($M_R$), der mit den Seitenkräften an dem mindestens einen Reifen korreliert ist;
   - einen Lenkgeschwindigkeitsanteil ($M_G$), der mit der Geschwindigkeit einer Bewegung des Lenkelements korreliert ist;
   - einen Lenkbewegungsrichtungsanteil ($M_B$), der der Lenkbewegungsrichtung entgegengesetzt ist;

   und das Lenksystem weiterhin umfasst:

   - eine Addiervorrichtung (2; 14) zur Bildung eines Summensignals ($M_{RES}$) aus dem von einem Rückstellfaktor ($C_R$) beeinflussten Rückstellanteil ($M_R$), dem von einem Lenkgeschwindigkeitsfaktor ($C_G$) beeinflussten Lenkgeschwindigkeitsanteil ($M_G$) und dem von einem Lenkbewegungsrichtungsfaktor ($C_B$) beeinflussten Lenkbewegungsrichtungsanteil ($M_B$); und
   - eine Vorrichtung (4; 16) zur Ermittlung des Reibwerts ($\mu$) zwischen Fahrbahn und Reifen des Fahrzeugs;

   **dadurch gekennzeichnet,**
   **dass** der Reibwert ($\mu$) individuell im Rückstellfaktor ($C_R$), und/oder im Lenkbewegungsrichtungsfaktor ($C_B$) und/oder im Lenkgeschwindigkeitsfaktor ($C_G$) berücksichtigbar ist.

2. Lenksystem nach Anspruch 1,
   **dadurch gekennzeichnet,**
   **dass** es weiterhin eine Vorrichtung zur Änderung des Lenkbewegungsrichtungsfaktors ($C_B$) umfasst, die derart ausgelegt ist, dass bei Feststellung einer Reduktion des Reibwerts ($\mu$) der Lenkbewegungsrichtungsfaktor ($C_B$) ebenfalls reduziert wird.

3. Lenksystem nach Anspruch 1 oder 2,
   **gekennzeichnet dadurch,**
   **dass** es weiterhin eine Vorrichtung zur Änderung des Rückstellfaktors ($C_R$) umfasst, die derart ausgelegt ist, dass bei Feststellung einer Reduktion des Reibwertes ($\mu$) der Rückstellfaktor ($C_R$) erhöht wird.

4. Lenksystem nach Anspruch 1 oder 2,
   **gekennzeichnet dadurch,**
   **dass** der Rückstellfaktor ($C_R$) vom Reibwert ($\mu$) unabhängig bleibt.

5. Lenksystem nach einem der vorhergehenden Ansprüche,
   **gekennzeichnet dadurch,**
   **dass** es weiterhin eine Vorrichtung zur Änderung des Lenkgeschwindigkeitsfaktors ($C_G$) umfasst, die derart ausgelegt ist, dass bei Feststellung einer Reduktion des Reibwertes ($\mu$) der Lenkgeschwindigkeitsfaktor ($C_G$) ebenfalls reduziert wird.

6. Lenksystem nach einem der Ansprüche 1 bis 4,
   **gekennzeichnet dadurch,**
   **dass** es weiterhin eine Vorrichtung zur Änderung des Lenkgeschwindigkeitsfaktors ($C_G$) umfasst, die derart ausgelegt ist, dass bei Feststellung einer Reduktion des Reibwertes ($\mu$) der Lenkgeschwindigkeitsfaktor ($C_G$) erhöht wird.

7. Lenksystem nach einem der Ansprüche 1 bis 4,
   **gekennzeichnet dadurch,**
   **dass** der Lenkgeschwindigkeitsfaktors ($C_G$) vom Reibwert ($\mu$) unabhängig bleibt.

8. Lenksystem nach einem der vorhergehenden Ansprüche,
   **dadurch gekennzeichnet,**
   **dass** das Lenksystem eine "Steer-by-Wire"-Lenkvorrichtung ist, und eine Vorrichtung zur Erzeugung des Rückstellanteils ($M_R$), eine Vorrichtung zur Erzeugung des Lenkgeschwindigkeitsanteils ($M_G$), eine Vorrichtung zur Erzeugung des Lenkbewegungsrichtungsanteils ($M_D$) und eine Lenkhilfsvorrichtung (30) umfasst, wobei die Vorrichtung zur Erzeugung des Rückstellanteils, die Vorrichtung zur Erzeugung des Lenkgeschwindigkeitsanteils und die Vorrichtung zur Erzeugung des Lenkbewegungsrichtungsanteils vorzugsweise in einer einzigen Vorrichtung zusammengefasst sind, und wobei die Lenkhilfsvorrichtung (30) eine Aktuatorvorrichtung umfasst.

9. Lenksystem nach Anspruch 8,
**dadurch gekennzeichnet,**
**dass** es weiterhin umfasst:

- einen Rückstellmomentsensor (10) zur Ermittlung des Rückstellmoments, das infolge der Seitenkräfte an dem mindestens einen Reifen auf die Lenkung wirkt; und
- einen Lenkelementwinkelsensor (20) zur Ermittlung der Lenkelementgeschwindigkeit und der Richtung der Lenkelementbewegung.

10. Lenksystem nach einem der vorhergehenden Ansprüche,
**dadurch gekennzeichnet,**
**dass** das Lenksystem eine elektrische Servolenkung ist und eine Lenkhilfsvorrichtung (30) umfasst, wobei die Lenkhilfsvorrichtung (30) eine Servounterstützung ($C_{servo}$) umfasst.

11. Lenksystem nach Anspruch 10,
**dadurch gekennzeichnet,**
**dass** es weiterhin umfasst:

- einen Rückstellmomentsensor (10) zur Ermittlung des Rückstellmoments, das infolge der Seitenkräfte an dem mindestens einen Reifen auf die Lenkung wirkt;
- einen Lenkelementwinkelsensor (20) zur Ermittlung der Lenkelementgeschwindigkeit und der Richtung der Lenkelementbewegung;
- einen Lenkmomentsensor zur Ermittlung des am Lenkelement resultierenden Lenkmoments ($M_H$).

12. Verfahren zum Erzeugen eines Lenkmoments an einem Lenkelement (8; 32) eines Fahrzeugs, wobei das Fahrzeug mindestens einen Reifen aufweist, folgende Schritte umfassend:

a) Ermitteln eines Rückstellanteils ($M_R$), der mit den Seitenkräften an dem mindestens einen Reifen korreliert ist;
b) Ermitteln eines Lenkgeschwindigkeitsanteils ($M_G$), der mit der Geschwindigkeit einer Bewegung des Lenkelements korreliert ist;
c) Ermitteln eines Lenkbewegungsrichtungsanteils ($M_B$), der der Lenkbewegungsrichtung entgegengesetzt ist;
d) Ermitteln des Reibwerts ($\mu$) zwischen Fahrbahn und Reifen des Fahrzeugs;
e) Bildung eines Summensignals ($M_{RES}$) aus dem von einem Rückstellfaktor beeinflussten Rückstellanteil ($M_R$), aus dem von einem Lenkgeschwindigkeitsfaktor beeinflussten Lenkgeschwindigkeitsanteil ($M_G$) und dem von einem Lenkbewegungsrichtungsfaktor beeinflussten Lenkbewegungsrichtungsanteil ($M_B$);
f) Erzeugen des am Lenkelement resultierenden Lenkmoments ($M_H$) aus dem Summensignal ($M_{RES}$);

**gekennzeichnet durch** folgenden weiteren Schritt:

g) Bereitstellen der Möglichkeit den ermittelten Reibwert ($\mu$) individuell im Rückstellfaktors ($C_R$), im Lenkbewegungsrichtungsfaktors ($C_B$) und im Lenkgeschwindigkeitsfaktors ($C_G$) zu berücksichtigen.

## Claims

1. A steering system for a vehicle having a steering element (8; 32) and at least one tyre, in which case the steering element moment ($M_H$) resulting at the steering element (8; 32) comprises the following components:

- a restoring component ($M_R$), which is correlated with the side forces on the at least one tyre;
- a steering speed component ($M_G$), which is correlated with the speed of a movement of the steering element;
- a steering movement directional component ($M_B$), which is opposed to the direction of the steering movement;

and the steering system further comprises:

- an adding device (2; 14) for producing a sum signal ($M_{RES}$) from the restoring component ($M_R$) influenced by a restoring factor ($C_R$), from the steering speed component ($M_G$) influenced by a steering speed factor ($C_G$) and from the steering movement directional component ($M_B$) influenced by a steering movement directional factor ($C_B$); and
- a device (4; 16) for determining the coefficient of friction ($\mu$) between road and tyre of the vehicle;

**characterized in that**
the coefficient of friction ($\mu$) can be taken into account individually in the restoring factor ($C_R$), and/or in the steering movement directional factor ($C_B$) and/or in the steering speed factor ($C_G$).

2. A steering system according to Claim 1,
**characterized in that**
it further comprises a device for altering the steering movement directional factor ($C_B$), said device being designed in such a way that, upon detection of a reduction of the coefficient of friction ($\mu$), the steering movement directional factor ($C_B$) is likewise reduced.

3. A steering system according to Claim 1 or 2, **characterized in that** it further comprises a device for altering the restoring factor ($C_R$), said device being designed in such a way that, upon detection of a reduction of the coefficient of friction ($\mu$), the restoring factor ($C_R$) is increased.

4. A steering system according to Claim 1 or 2, **characterized in that** the restoring factor ($C_R$) remains independent of the coefficient of friction ($\mu$).

5. A steering system according to one of the preceding claims, **characterized in that** it further comprises a device for altering the steering speed factor ($C_G$), said device being designed in such a way that, upon detection of a reduction of the coefficient of friction ($\mu$), the steering speed factor ($C_G$) is likewise reduced.

6. A steering system according to one of Claims 1 to 4, **characterized in that** it further comprises a device for altering the steering speed factor ($C_G$), said device being designed in such a way that, upon detection of a reduction of the coefficient of friction ($\mu$), the steering speed factor ($C_G$) is increased.

7. A steering system according to one of Claims 1 to 4, **characterized in that** the steering speed factor ($C_G$) remains independent of the coefficient of friction ($\mu$).

8. A steering system according to one of the preceding claims, **characterized in that** the steering system is a "steer-by-wire" steering device, and comprises a device for generating the restoring component ($M_R$), a device for generating the steering speed component ($M_G$), a device for generating the steering movement directional component ($M_B$) and an auxiliary steering device (30), in which case the device for generating the restoring component, the device for generating the steering speed component and the device for generating the steering movement directional component are preferably combined to form a single device, and the auxiliary steering device (30) comprises an actuator device.

9. A steering system according to Claim 8,

**characterized in that** it further comprises:

- a restoring moment sensor (10), for determining the restoring moment which acts upon the steering as a result of the side forces on the at least one tyre; and
- a steering element angle sensor (20) for determining the steering element speed and the direction of movement of the steering element.

10. A steering system according to one of the preceding claims, **characterized in that** the steering system is an electric power-assisted steering system and includes an auxiliary steering device (30), the auxiliary steering device (30) comprising servo assistance ($C_{servo}$).

11. A steering system according to Claim 10, **characterized in that** it further comprises:

- a restoring moment sensor (10), for determining the restoring moment which acts upon the steering as a result of the side forces on the at least one tyre;
- a steering element angle sensor (20) for determining the steering element speed and the direction of movement of the steering element;
- a steering moment sensor for determining the steering moment ($M_H$) resulting at the steering element.

12. Method of generating a steering moment at a steering element (8; 32) of a vehicle, the vehicle having at least one tyre and said method comprising the following steps:

a) determination of a restoring component ($M_R$), which is correlated with the side forces on the at least one tyre;
b) determination of a steering speed component ($M_G$), which is correlated with the speed of a movement of the steering element;
c) determination of a steering movement directional component ($M_B$), which is opposed to the direction of the steering movement;
d) determination of the coefficient of friction ($\mu$) between road and tyre of the vehicle;
e) production of a sum signal ($M_{RES}$) from the restoring component ($M_R$) influenced by a restoring factor, from the steering speed component ($M_G$) influenced by a steering speed factor and from the steering movement directional component ($M_B$) influenced by a steering movement directional factor;
f) generation of the steering moment ($M_H$) resulting at the steering element from the sum signal ($M_{RES}$);

**characterized by** the following additional step:

g) providing the possibility of taking into account the determined coefficient of friction ($\mu$) individually in the restoring factor ($C_R$), in the steering movement directional factor ($C_B$) and in the steering speed factor ($C_G$).

## Revendications

1. Système de direction pour un véhicule, comportant un élément de direction (8 ; 32) et au moins un pneumatique, dans lequel le moment de l'élément de direction ($M_H$), résultant sur l'élément de direction (8 ; 32), comporte les composantes suivantes :

   - une composante de rappel ($M_R$), qui est corrélée avec les forces latérales exercées sur ledit au moins un pneumatique ;
   - une composante de vitesse de braquage ($M_G$), qui est corrélée avec la vitesse d'un mouvement de l'élément de direction ;
   - une composante de direction du mouvement de braquage ($M_B$), qui est opposée à la direction du mouvement de braquage ;

   et le système de direction comporte en outre :

   - un totaliseur (2 ; 14) destiné à générer un signal de somme ($M_{RES}$) à partir de la composante de rappel ($M_R$), influencée par un facteur de rappel ($C_R$), de la composante de vitesse de braquage ($M_G$), influencée par un facteur de vitesse de braquage ($C_G$), et de la composante de direction du mouvement de braquage ($M_B$), influencée par un facteur de direction du mouvement de braquage ($C_B$) ; et
   - un dispositif (4 ; 16) destiné à déterminer le coefficient de frottement ($\mu$) entre la chaussée et le pneumatique du véhicule ;

   **caractérisé en ce que** le coefficient de frottement ($\mu$) peut être pris en compte individuellement dans le facteur de rappel ($C_R$) et/ou dans le facteur de direction du mouvement de braquage ($C_B$) et/ou dans le facteur de vitesse de braquage ($C_G$).

2. Système de direction selon la revendication 1, **caractérisé en ce qu'**il comprend, en outre, un dispositif destiné à modifier le facteur de direction du mouvement de braquage ($C_B$) et qui est conçu de telle sorte que, lors de la constatation d'une diminution du coefficient de frottement ($\mu$), le facteur de direction du mouvement de braquage ($C_B$) est également diminué.

3. Système de direction selon la revendication 1 ou 2, **caractérisé en ce qu'**il comprend, en outre, un dispositif destiné à modifier le facteur de rappel ($C_R$) et qui est conçu de telle sorte que, lors de la constatation d'une diminution du coefficient de frottement ($\mu$), le facteur de rappel ($C_R$) est augmenté.

4. Système de direction selon la revendication 1 ou 2, **caractérisé en ce que** le facteur de rappel ($C_R$) reste indépendant du coefficient de frottement ($\mu$).

5. Système de direction selon l'une quelconque des revendications précédentes, **caractérisé en ce qu'**il comprend, en outre, un dispositif destiné à modifier le facteur de vitesse de braquage ($C_G$) et qui est conçu de telle sorte que, lors de la constatation d'une diminution du coefficient de frottement ($\mu$), le facteur de vitesse de braquage ($C_G$) est également diminué.

6. Système de direction selon l'une quelconque des revendications 1 à 4, **caractérisé en ce qu'**il comporte, en outre, un destiné à modifier le facteur de vitesse de braquage ($C_G$) et qui est conçu de telle sorte que, lors de la constatation d'une diminution du coefficient de frottement ($\mu$), le facteur de vitesse de braquage ($C_G$) est augmenté.

7. Système de direction selon l'une quelconque des revendications 1 à 4, **caractérisé en ce que** le facteur de vitesse de braquage ($C_G$) reste indépendant du coefficient de frottement ($\mu$).

8. Système de direction selon l'une quelconque des revendications précédentes, **caractérisé en ce que** le système de direction est un dispositif de direction « steer by wire » (direction par câble) et comprend un dispositif destiné à générer la composante de rappel ($M_R$), un dispositif destiné à générer la composante de vitesse de braquage ($M_G$), un dispositif destiné à générer la composante de direction du mouvement de braquage ($M_D$) et un dispositif de direction auxiliaire (30), le dispositif destiné à générer la composante de rappel, le dispositif destiné à générer la composante de vitesse de braquage et le dispositif destiné à générer la composante de direction du mouvement de braquage étant regroupés de préférence dans un seul dispositif, et le dispositif de direction auxiliaire (30) comportant un dispositif à actionneur.

9. Système de direction selon la revendication 8, **caractérisé en ce qu'**il comporte en outre :

   - un capteur du moment de rappel (10) destiné à détecter le moment de rappel qui agit sur la direction sous l'effet des forces latérales exercées sur ledit au moins un pneumatique ; et
- un capteur d'angle de l'élément de direction (20) destiné à détecter la vitesse de l'élément de direction et la direction du mouvement de l'élément de direction.

10. Système de direction selon l'une quelconque des revendications précédentes, **caractérisé en ce que** le système de direction est une direction assistée électrique et comprend un dispositif de direction auxiliaire (30), ledit dispositif de direction auxiliaire (30) comportant une servoassistance ($C_{servo}$).

11. Système de direction selon la revendication 10, **caractérisé en ce qu'**il comprend en outre :

   - un capteur du moment de rappel (10) destiné à détecter le moment de rappel qui agit sur la direction sous l'effet des forces latérales exercées sur ledit au moins un pneumatique ; et
   - un capteur d'angle de l'élément de direction (20) destiné à détecter la vitesse de l'élément de direction et la direction du mouvement de l'élément de direction ;
   - un capteur de moment de braquage destiné à détecter le couple de braquage ($M_H$) résultant sur l'élément de direction.

12. Procédé destiné à générer un moment de braquage sur un élément de direction (8 ; 32) d'un véhicule, le véhicule comportant au moins un pneumatique, comportant les étapes suivantes :

   a) déterminer une composante de rappel ($M_R$), qui est corrélée avec les forces latérales exercées sur ledit au moins un pneumatique ;
   b) déterminer une composante de vitesse de braquage ($M_G$) , qui est corrélée avec la vitesse d'un mouvement de l'élément de direction ;
   c) déterminer une composante de direction du mouvement de braquage ($M_B$), qui est opposée à la direction du mouvement de braquage ;
   d) déterminer le coefficient de frottement ($\mu$) entre la chaussée et le pneumatique du véhicule ;
   e) former un signal de somme ($M_{RES}$) à partir de la composante de rappel ($M_R$), influencée par un facteur de rappel, de la composante de vitesse de braquage ($M_G$), influencée par un facteur de vitesse de braquage, et de la composante de direction du mouvement de braquage ($M_B$), influencée par un facteur de direction du mouvement de braquage ;
   f) générer à partir du signal de somme ($M_{RES}$) le moment de braquage ($M_H$) résultant sur l'élément de direction ;

   **caractérisé par** l'étape supplémentaire suivante :

g) mettre à disposition la possibilité de prendre en compte individuellement le coefficient de frottement ($\mu$) déterminé, dans le facteur de rappel ($C_R$), dans le facteur de direction du mouvement de braquage ($C_B$) et dans le facteur de vitesse de braquage ($C_G$).

EP 1 243 496 B1

FIG.1

FIG.2